# EUROPEAN PATENT SPECIFICATION

(11) **EP 3 322 303 B1**
(45) Date of publication and mention of the grant of the patent: **03.07.2019**
(21) Application number: 16725118.0
(22) Date of filing: 24.05.2016
(51) Int. Cl.: A23F 3/32, A23F 3/12, A23F 3/14

(54) **BEVERAGE PRECURSOR**
GETRÄNKEVORPRODUKT
PRÉCURSEUR DE BOISSON

(30) Priority: 16.07.2015 EP 15177155
(43) Date of publication of application: 23.05.2018
(73) Proprietor: Unilever PLC, London, Greater London EC4Y 0DY (GB); Unilever NV, 3013 AL Rotterdam (NL)
(72) Inventor: ANSARI, Mansoor, Ahmed, Bedford Bedfordshire MK44 1LQ (GB); ORMEROD, Andrew, Paul, Bedford Bedfordshire MK44 1LQ (GB); RAJAPANDIAN, Benjamin, Jesukumar, Wirral Merseyside CH63 3JW (GB)
(74) Representative: Warner, Guy Jonathan
(86) International application number: PCT/EP2016/061703
(87) International publication number: WO 2017/008943

(56) References cited:
- EP-A1- 2 517 565
- EP-B1- 2 192 843
- AT-B- 377 424
- DE-A1-102004 024 680
- US-A1- 2008 020 069

## Description

### Field of the invention

The present invention relates to beverage precursors for preparing tea-based beverages. In particular, the invention relates to tea granules for use in such precursors.

### Background of the invention

Tea has been consumed for centuries and is popular in both developed and developing countries. After water, tea is the most widely consumed beverage in the world. The popularity of tea is influenced by a number of factors: it is generally regarded as healthy, it can be a safe alternative to untreated water, it is associated with benefits such as relaxation and mental alertness, and it has a widely acceptable taste.

The health benefits of tea are primarily attributed to the presence of high levels of polyphenols. Both black tea and green tea are rich in polyphenols, which can include catechins, theaflavins, and thearubigins.

Tea-based beverages are traditionally produced by infusing tea leaves in hot water and separating the infusion liquor from the spent tea material. Tea polyphenols are believed to contribute to the sensory properties of the infusion liquor. Unfortunately, a significant proportion of the tea polyphenols are not released into the infusion liquor, and are thus discarded with the spent tea material. Thus there is scope for providing a beverage precursor with improved infusion performance.

IN 187547 (Hindustan Lever Limited) relates to a process of granulating dust tea with sugar based additives to obtain a homogenous product resembling leaf tea. The infusion performance of the products is not disclosed, although the samples are said to have organoleptic attributes (e.g. taste, mouth feel, tea character) that are comparable to those from standard packed tea when prepared in the traditional Indian manner (boiling 1.2 litres of water along with 45 g of jaggery for 3 minutes, adding 7.75 g of the appropriate tea sample, and boiling for a further 15 minutes). The granulated tea product of IN 187547 comprises jaggery (a type of traditional non-centrifugal cane sugar) as the binder in an amount of 30 to 85% by weight. Thus, although this granulated product may be suitable for the Indian market, it is not suitable for markets where unsweetened tea beverages are preferred. Furthermore, since the binder is sugar-rich (the predominant components of jaggery are sucrose, glucose, fructose and water), both the binder itself and the resulting granules are likely to be hygroscopic and thus difficult to handle on a large scale. For example, the granules may aggregate into solid masses which can impede the operation of a production line or even lead to machine breakdown. Further, AT 377424 teaches a method of manufacturing porous tea granules by fluid bed granulation.

Thus we have recognised that there is still a need to provide beverage precursors with improved infusion performance, which do not provide unwanted flavours to the beverage (such as excessive sweetness), and which are convenient to handle in a factory environment.

### Summary of the invention

In a first aspect, the present invention relates to porous tea granules comprising leaf tea particles and binder, wherein:
- at least 50 % by weight of the leaf tea particles have a particle size of 100 to 300 µm;
- the binder comprises exogenous biopolymer;
- the tea granules comprise binder in an amount of 0.01 to 3 % by dry weight; and
- the porous tea granules have a D[4,3] of more than 350 µm.

Consumers often have a preference for teas with a fast infusion rate and strong liquor colour. One of the aims of the present invention is to allow consumers to produce a beverage using a smaller amount of tea material and/or requiring a shorter preparation time compared to conventional leaf tea.

Without wishing to be bound by theory, the inventors believe that the structural components and low surface area to volume ratio of conventional leaf tea limits its infusion performance. Reducing the particle size of leaf tea is thought to improve infusion performance by reducing the structural barriers and increasing the surface area to volume ratio. However, merely using small leaf particles (or incorporating small leaf particles into an existing blend) is undesirable for several reasons. Firstly, consumers typically associate small leaf particles with poor quality teas. Secondly, small leaf particles can have a negative impact on infusion liquor (e.g. increased haze).

Furthermore, small leaf particles can lead to technical challenges (such as increased bag sift) when incorporated into tea bags. The porous granules of the present invention have improved infusion performance, whilst being of a size which limits the negative aspects typically associate with small leaf particles.

In a second aspect, the present invention relates to a beverage precursor comprising the porous tea granules of the first aspect of the invention. Such a beverage precursor allows a consumer to produce a beverage in an efficient manner, e.g. by requiring a shorter brewing period when compared to conventional leaf tea. Additionally or alternatively, the beverage precursor may be more economical, e.g. it may allow a reduction of the amount of the beverage precursor required to achieve a particular infusion performance when compared to conventional leaf tea.

In a third aspect, the present invention relates to a process for manufacturing porous tea granules, the process comprising the steps of:
(a) providing leaf tea;
(b) grinding and/or sieving the leaf tea such that at least 50 % by weight of the leaf tea has a particle size of 100 to 300 µm;
(c) forming a mixture comprising the leaf tea obtained in step (b) and binder;
(d) forming porous granules from the mixture by low-shear granulation;
wherein the porous tea granules have a D[4,3] of more than 350 µm and wherein the binder comprises exogenous biopolymer.

The process is preferably used to manufacture the porous tea granules of the first aspect of the invention. It should be noted that it is possible for steps (c) and (d) to be performed separately or simultaneously. From the standpoint of process efficiency, it is preferred that steps (c) and (d) are performed simultaneously.

### Summary of the drawings

The invention will be described with reference to the accompanying drawings in which:
- Figure 1a is a scanning electron micrograph of conventional black leaf tea;
- Figure 1b is a confocal micrograph of conventional black leaf tea;
- Figure 2a is a scanning electron micrograph of a porous tea granule;
- Figure 2b is a confocal micrograph of a porous tea granule;
- Figure 3 shows infusion curves for tea granules in tea bags during dynamic dunking;
- Figure 4 shows infusion curves for tea granules as loose tea during dynamic stirring;
- Figure 5 shows infusion curves for tea granules in a blend in tea bags during dynamic dunking.

### Detailed description of the invention

### Tea

"Tea" for the purpose of the present invention means material from *Camellia sinensis* var. *sinensis* and/or *Camellia sinensis* var. *assamica.* The term "leaf tea" refers to leaf and/or stem material from the tea plant in an uninfused form (i.e. has not been subjected to a solvent extraction step). Leaf tea is dried to a moisture content of less than 30 wt.%. Typically, leaf tea has a moisture content of 1 to 10 wt.%.

### Leaf tea particles

The leaf tea particles can comprise green leaf tea, black leaf tea, or oolong leaf tea. They may also comprise a blend of one or more of these types of leaf tea. "Green leaf tea" refers to substantially unfermented leaf tea. "Black leaf tea" refers to substantially fermented leaf tea. "Oolong leaf tea" refers to partially fermented leaf tea. "Fermentation" refers to the oxidative and hydrolytic process that tea undergoes when certain endogenous enzymes and substances are brought together. During this process colourless catechins in the leaves are converted to a complex mixture of yellow/orange to dark brown polyphenolic substances.

National or regional culture often dictate consumer preferences with respect to tea. For example, green tea beverages have been consumed in China and Japan for many hundreds of years, whilst in Europe and India black tea beverages are more popular.

Consumers in regions with a tradition of black tea consumption often have a preference for teas with a fast infusion rate and strong liquor colour. In order for the tea granules to help provide beverage precursors that meet this consumer need, it is preferred that the leaf tea particles are black leaf tea particles.

In recent years, there has been considerable interest in the potential health benefits of compounds present in green tea (particularly the flavanols such as catechins). In order for the tea granules to aid in delivering such benefits, it is preferred that the leaf tea particles are green leaf tea particles.

Naturally, some consumers will want the best of both worlds. Therefore, it is also envisaged that the tea granules could contain a mixture of black leaf tea particles and green leaf tea particles.

At least 50 % by weight of the leaf tea particles have a particle size of 100 to 300 µm. Preferably at least 65 % by weight of the tea particles have this particle size, more preferably at least 80 % by weight of the tea particles have this particle size, still more preferably at least 90 % by weight of the tea particles have this particle size, and most preferably at least 95 % by weight of the tea particles have this particle size. This particle size can be achieved in a number of ways. For example, by grinding or milling leaf tea to an appropriate size and/or by sorting the leaf tea according to particle size.

The weight percentage of particles having a particular particle size can be determined by sorting the tea into fractions according to particle size (e.g. by sieving) and then weighing the fractions. When determining particle size, the leaf tea particles are in a dried format and have a moisture content of less than 30 wt.% (typically 1 to 10 wt.%).

Leaf tea contains material having a range of particle sizes as a result of the normal manufacturing process. Indeed, leaf tea is typically sorted into various grades (e.g. whole leaf, brokens, fannings and dusts) prior to being sold at auction. One way of sorting tea is according to particle size. For example, the leaf tea may be passed through a series of vibrating screens where the various grades are retained and collected. Leaf tea particles having a particle size of 100 to 300 µm could be separated in this manner. For example, particles which passed through a screen having a Tyler mesh size of 48 mesh (297 µm), and were retained by a screen having a Tyler mesh size of 150 mesh (105 µm), would have an appropriate particle size.

Up to 50 % of the leaf tea particles can have a particle size that does not fall within the range of 100 to 300 µm. Usually, such tea particles will have a particle size below 100 µm, since removing very small particles following grinding and/or sieving is inconvenient, and such small particles do not tend to have a commercial value. However, without wishing to be bound by theory, we believe that when the tea granules are brewed in hot water, some disintegration of the granules may occur. Thus, large amounts of particles having a particle size below 100 µm are undesirable since these would not be retained by either a tea strainer or an infusion packet and could therefore impart unwanted haziness and/or precipitate to the brewed liquor. Therefore, it is preferred that the tea granules comprise leaf tea particles having a particle size of less than 100 µm in an amount of less than 30 % by weight, more preferably less than 20 % by weight, still more preferably less than 10 % by weight, and most preferably less than 5 % by weight.

Without wishing to be bound by theory, we believe that leaf tea particles having a particle size of greater than 300 µm are likely to have a negative impact on the infusion performance of the porous tea granules due to the fact that they have a reduced surface area to volume ratio when compared with smaller leaf tea particles. Since leaf tea particles with a particle size of greater than 300 µm are more easily removed following grinding and/or sieving, it is possible to ensure than only a minor amount of particles of this size will be present in the granules. Preferably the tea granules comprise leaf tea particles having a particle size of greater than 300 µm in an amount of less than 15 % by weight, more preferably less than 10 % by weight, still more preferably less than 5 % by weight, and most preferably less than 1 % by weight.

The leaf tea particles are substantially insoluble. As used herein the term "substantially insoluble" refers to a substance that will not dissolve when steeped or soaked in an aqueous liquid such as water. The substance may nonetheless release certain watersoluble substances when steeped or soaked in water (e.g. flavour and/or aroma molecules). Furthermore, as mentioned above, there is the possibility that some disintegration of the tea granules may occur when they are brewed.

### Exogenous biopolymer

The binder comprises exogenous biopolymer. As used herein the term "exogenous biopolymer" means any biopolymer that is not derived from tea, and includes polysaccharides, oligosaccharides, gums, polypeptides, proteins and derivatives thereof. Preferably, the exogenous biopolymer is selected from polysaccharides, oligosaccharides, gums, and derivatives thereof.

Although some consumers enjoy sweetened tea, other consumers prefer it to be unsweetened. In order to avoid introducing unwanted flavour, it is preferred that the exogenous biopolymer has a low relative sweetness. Relative sweetness (R) is the sweetness of a substance relative to the sweetness of sucrose (i.e. sucrose has a relative sweetness of 1). This is a common means of expressing sweetness in the food industry. It is preferred that the relative sweetness of the exogenous biopolymer is from 0.01 to 0.50, more preferably from 0.02 to 0.35 and most preferably from 0.05 to 0.20. These ranges are envisaged to cover all sub-ranges (i.e. ranges wherein any given lower limit of relative sweetness is associated with any given upper limit of relative sweetness).

Particularly useful exogenous biopolymers (which have good water solubility, provide viscosity and are food grade) include guar gum, locust bean gum, pectin and xanthan gum.

The amount of binder in the tea granules is preferably in the range of 0.01 wt.% to 3 wt.%. High amounts of binder can be undesirable, for example they may add unwanted cost and/or flavour to the tea granules. Therefore, it is preferred that the tea granules comprise binder in an amount of no more than 2 wt.%, more preferably no more than 1.5 wt.%, still more preferably no more than 1 wt.%, and most preferably no more than 0.8 wt.%. The amount of binder should be sufficient to ensure that the leaf tea particles adhere together to form the tea granules. Therefore, preferably the tea granules comprise binder in an amount of at least 0.01 wt.%, more preferably at least 0.05 wt.%, still more preferably at least 0.1 wt.% and most preferably at least 0.15 wt.%.

### Porous tea granules

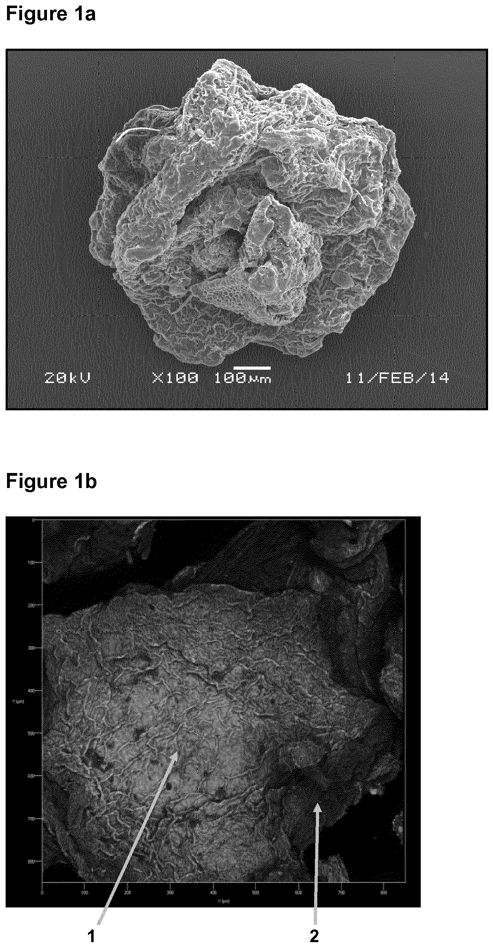

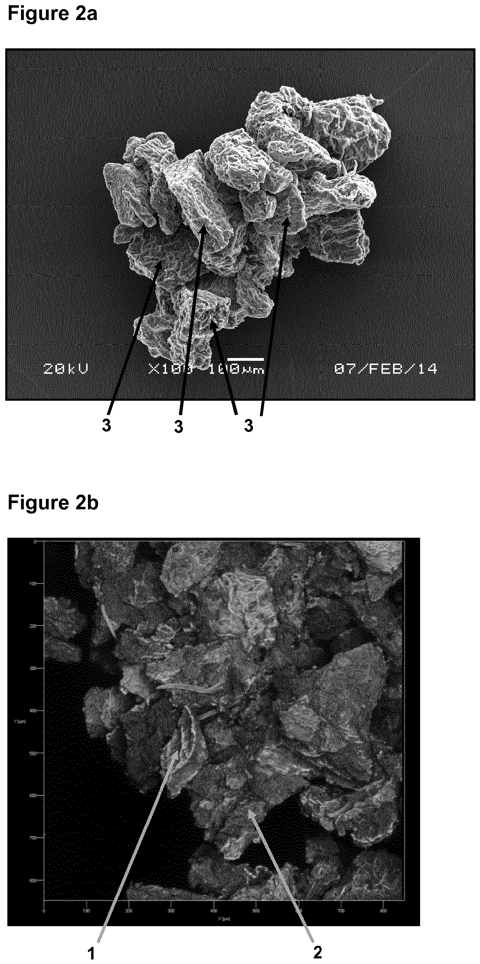

The tea granules according to the present invention are porous. Such porous granules have a more open structure than the natural cellular structure of a typical leaf tea particle. The porous nature of the granules can be seen using microscopy. Figures 1 and 2 show the structural differences between normal black leaf tea (Figure 1) and porous tea granules according to the invention (Figure 2).

Figure 1 shows normal black leaf tea. In its dried state, a leaf piece studied via SEM (Figure 1a) appears to be a single continuum, which is twisted and curled by the manufacturing process. The cuticle and cut surface of a single leaf piece can be discerned in the confocal image, with the cuticle being a large proportion of the total piece surface (Figure 1b).

Figure 2 shows a tea granule of comparable size. In its dried state, an agglomeration of many smaller particles can be clearly seen in both the SEM (Figure 2a) and confocal (Figure 2b) images. The open structure of the granule can be seen with gaps clearly visible between the constituent particles (Figure 2a). The gaps are also visible in the confocal image, with the majority of the exposed surfaces being cut surfaces, rather than cuticle surfaces (Figure 2b).

The porous tea granules have a D[4,3] of more than 350 µm. The volume moment mean D[4,3] reflects the size of those particles which constitute the bulk of the sample volume. The porous granules of the present invention have a size which limits the negative aspects typically associated with small leaf particles (e.g. consumer acceptance, ease of handling in a factory environment, *etc*)*.* For example, the sizing of the porous granules is associated with improved consumer acceptance in terms of infusion liquor properties (e.g. lower haze) and/or product appearance. In order to maximise such benefits, the D[4,3] is preferably more than 400 µm, more preferably more than 450 µm and most preferably more than 500 µm.

A Malvern Mastersizer 2000 with Scirocco was used for particle size characterisation of both un-granulated and granulated tea particles. The Scirocco is a dry dispersion unit with a variable vibration feed rate and dispersing pressure. For smaller particles and larger granules, a dispersing pressure of 2.0 bar and 0.5 bar was used, respectively. The vibration feed rate was kept at 40% for both cases. The Mastersizer 2000 software controls the system during the measurement process and analyses the scattering data to calculate volumetric size distribution.

### Beverage precursor

The present invention also relates to a beverage precursor comprising the porous tea granules. As used herein the term "beverage precursor" refers to a fabricated composition suitable for preparing a beverage.

The beverage precursor may be contacted with an aqueous liquid such as water to provide a beverage. This process is referred to as brewing. Brewing can be carried out at any temperature, although preferably the brewing temperature is at least 40°C, more preferably at least 55°C, most preferably at least 70°C. Preferably the brewing temperature is less than 120°C, more preferably less than 100°C.

A beverage is defined as a substantially aqueous drinkable composition which is suitable for human consumption. Preferably the beverage comprises at least 85 wt.% water, more preferably at least 90 wt.% water, and most preferably 95 to 99.9 wt.% water.

As well as the porous tea granules, it is preferred that the beverage precursor additionally comprises leaf tea. The meaning of the term "leaf tea" is set out above under the heading "Tea".

At least 90 wt.% of the leaf tea has a particle size of -5+30 mesh. Preferably at least 90 wt.% of the leaf tea has a particle size of -5+25 mesh, more preferably at least 90 wt.% of the leaf tea has a particle size of -5+20 mesh.

For the purpose of the present invention, the particle size of leaf tea is characterised by sieve mesh size. Tyler mesh sizes are used throughout (see Table 1). Where the symbol "+" is present before the mesh size, this indicates that the particles are retained by a sieve having this mesh size. Where the symbol "-" is present before the mesh size, this indicates that the particles pass through a sieve having this mesh size. The leaf tea is typically dried prior to sieving. For example, if the particle size is described as -5+30 mesh, then the particles will pass through a 5 mesh sieve (particles smaller than 4.0 mm) and be retained by a 30 mesh sieve (particles larger than 595 µm).

**Table 1: Selected Tyler mesh sizes**

| | | | | | | |
|---|---|---|---|---|---|---|
| Tyler mesh size | 5 mesh | 20 mesh | 25 mesh | 30 mesh | 48 mesh | 150 mesh |
| Opening size | 4.0 mm | 841 µm | 707 µm | 595 µm | 297 µm | 105 µm |

The beverage precursor is preferably packaged. For convenience of use, it is particularly preferred that the beverage precursor is packaged in an infusion packet (e.g. a tea bag). Such an infusion packet comprises porous material. The porous material can be any material that is suitable for enabling water to permeate the packet without allowing insoluble contents to leave the packet. Examples of suitable material include filter paper, nylon mesh, gauze, muslin, nonwoven fabric, although any other similar material orfabric may also be used. As such, when the beverage precursor is packaged in an infusion packet, it is preferred that substantially all of the porous tea granules will be retained within the infusion packet.

To allow for long-term storage stability, the beverage precursor preferably comprises less than 15 wt.% water, more preferably less than 10 wt.%, and most preferably from 0.1 to 5 wt.%. It will be understood that these amounts refer to the water content prior to using the beverage precursor to produce a beverage (i.e. prior to brewing).

Other ingredients which are commonly used to flavour beverage precursors comprising leaf tea (e.g. bergamot, citrus peel, and the like) may optionally be combined with the tea granules and leaf tea in the beverage precursor of the present invention. For example, the beverage precursor may additionally comprise herb plant material. The term "herb plant material" refers to material which is commonly used as a precursor for herbal infusions. Preferably the herb plant material is selected from chamomile, cinnamon, elderflower, ginger, hibiscus, jasmine, lavender, lemongrass, mint, rooibos, rosehip, vanilla and verbena. The beverage precursor may additionally or alternatively comprise fruit pieces (e.g. apple, blackcurrant, mango, peach, pineapple, raspberry, strawberry, etc.).

There is no particular limit with regard to the relative amounts of porous tea granules and leaf tea in the beverage precursor. The inventors believe that use of a large amount of the porous granules in the beverage precursor may have a negative effect on the appearance, and thus the consumer acceptance of the beverage precursor. From the standpoint of balancing infusion performance with consumer acceptance it is preferred that the weight ratio of porous tea granules to leaf tea is from 5:1 to 1:5, more preferably from 4:1 to 1:4, still more preferably from 3:1 to 1:3, and most preferably from 2:1 to 1:2.

It is preferred that the mass of the beverage precursor is at least 1 g, as smaller amounts are difficult to accurately portion and dose. More preferably the mass is at least 1.2 g, and most preferably at least 1.4 g. It is further preferred that the mass of the beverage precursor is less than 4 g, as larger amounts become inconvenient to store and/or handle. More preferably the mass is less than 3 g, and most preferably less than 2 g.

The beverage precursor may be prepared via any suitable method. For example, by combining porous tea granules according to the present invention with leaf tea, wherein at least 90 wt% of the leaf tea has a particle size of -5+30 mesh. This process may optionally contain the additional and subsequent step of packaging the beverage precursor, preferably in an infusion packet.

As used herein the term "comprising" encompasses the terms "consisting essentially of" and "consisting of". All percentages and ratios contained herein are calculated by weight unless otherwise indicated. It should be noted that in specifying any range of values or amounts, any particular upper value or amount can be associated with any particular lower value or amount. Except in the operative and comparative examples, all numbers in the description indicating amounts of materials, conditions of reaction, physical properties of materials, and/or use are to be understood as being preceded by the word "about". The various features of the embodiments of the present invention referred to in individual sections above apply, as appropriate, to other sections *mutatis mutandis.* Consequently features specified in one section may be combined with features specified in other sections as appropriate. The disclosure of the invention as found herein is to be considered to cover all embodiments as found in the claims as being multiply dependent upon each other. Unless defined otherwise, all technical and scientific terms used herein have the same meaning as commonly understood by one of ordinary skill in the art in the field of tea processing.

### Examples

The following non-limiting examples illustrate the present invention.

### Example 1

The SEM images of black leaf tea and tea granules shown in Figures 1a and 2a were obtained as follows. Samples were applied to a sticky carbon tab, mounted on a large SEM sample stub using a small artist's paintbrush. The samples were then sputter coated with 10 nm of gold/palladium before imaging in the SEM (JEOL JSM-6060 operated at 20 kV). Images were taken in the magnification range of ×16 to ×900.

The confocal images of black leaf tea and tea granules shown in Figures 1b and 2b were obtained as follows. The dry granules/particles were placed in a 35 mm glass bottom culture dishes with a 14 mm Microwell and No. 1.0 cover glass. Confocal laser imaging was performed using a Zeiss LSM-780 confocal scanning laser microscope (Carl Zeiss Ltd) with a 10×/0.45 objective. Image processing was accomplished using ZEN 2012 V software. Three laser excitation lines (405 nm, 488 mnm and 561 nm) were used to excite the auto fluorescent molecules and emissions were collected with a PMT detector (429 to 474 nm), GaAsP detector (517 to 579 nm) and a second PMT detector (650 to 758 nm). 3D z-stack tiled images were obtained using a pixel dwell of 0.64µs in sequential line-scanning mode with a zoom factor of 1.0, 2× line averaging and a z-step size of 8 µm. 3D composite fluorescent images were generated using the 3D rendition feature of the ZEN software in maximum intensity mode.

The black leaf tea (control) was standard PF1 grade material. This was obtained via standard tea processing in a Kenyan factory comprising standard plucking, withering, maceration, fermentation, drying and size grading.

The tea granules were prepared as follows:

### a) Milling

A 160UPZ Impact Mill (Hosokawa Micron UK) was used to mill the standard PF1 grade material into fine particles of relative wider size distribution. The machine was operated at 6000 rpm at a feeding rate of 60 kg/hr. The grounds particle were then screened using ATS600 classifier (Allgaier GmbH) into different narrow size fractions of:
- less than 150 µm,
- 150 to 250 µm,
- 250 to 425 µm, and
- greater than 425 µm.

### b) Granulation protocol

Granulation was performed in an Aeromatic Fielder MP1 fluid bed granulator (GEA Process Systems). The granulation procedure may be divided into three steps, namely: heating, agglomeration and drying. A mass of 1 kg of ground tea particles was fluidized by maintaining the air flow between 10% to 20%. Temperature of the fluidizing particle bed was raised to 60°C to 70°C before introducing an aqueous solution of guar gum (for example at 0.75% w/w) through a two-fluid nozzle at a flow rate of 25 to 30 ml/min using a peristaltic pump. The addition of aqueous binder caused the bed temperature to drop to around 50°C. The nozzle height and atomizing air pressure (at 0.75 bar) were kept constant throughout the study. A periodical blow back pressure of 0.5 bar was applied during the experiment to re-introduce any fine particles into the particle bed. The drying regime started immediately after completing the dosage of the liquid binder, and the experiment was terminated after fluidizing the particles at elevated temperature (70°C) for further 10 to 15 minutes. Optionally, the granulated product was then further dried into a tray dryer at 80°C for 2 to 3hrs to ensure a moisture content in the final product of below 3 wt.%. The dried granules contained 0.28% w/w guar, and had a D[4,3] particle size of 600 µm.

### Example 2

The control material & tea granules were obtained & prepared as described above in Example 1.

The infusion performance of the porous tea granules was compared to that of control tea material. More specifically, control material was compared to three different samples of porous tea granules. Table 2 shows the amounts of leaf tea or tea granules used in each case.

**Table 2**

| | **Control A** | **Sample 1** | **Sample 2** | **Sample 3** |
|---|---|---|---|---|
| **Leaf tea** | 3.125 g | - | - | - |
| **Tea granules** | - | 3.125g | 2.5g | 2.19 g |

The infusion characteristics were determined using the dynamic method described in WO 2012/113602. The dynamic (continuous dunking) procedure represents a laboratory simulation of consumer preparation of an infusion involving agitation of a tea bag. Tea bags having the same size and geometry and made from the same filter material were used in all cases (tetrahedral tea bags). Absorbance was measured at 445 nm. The total infusion time was 120 seconds in a volume of 200ml, and the sampling frequency was 1 sample per second.

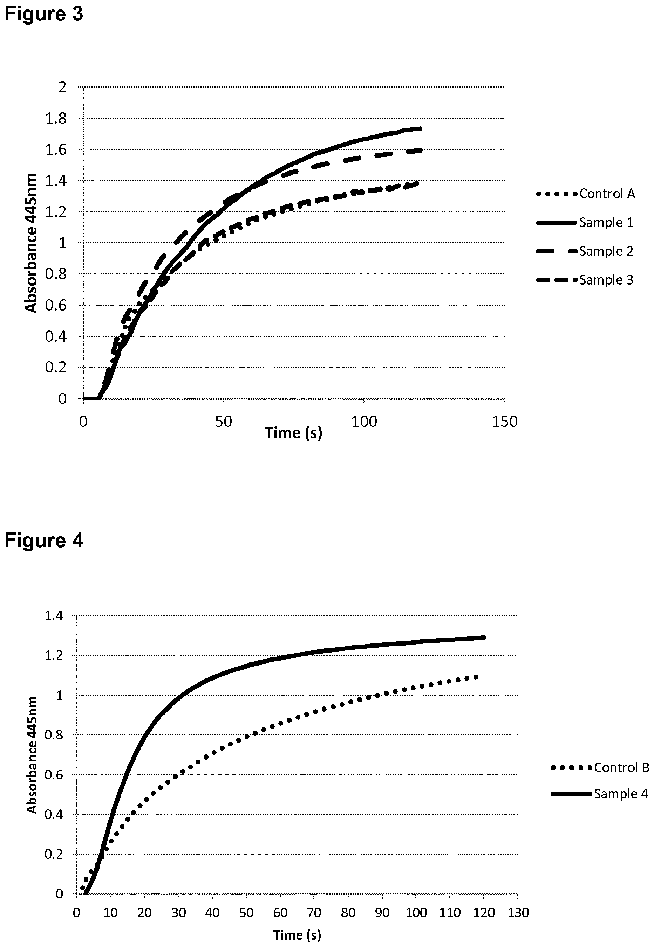

The infusion curves are shown in Figure 3. Both Sample 1 (porous granules, standard bag weight) and Sample 2 (porous granules, 20% bag weight reduction) have improved infusion performance compared with Control A (leaf tea, standard bag weight). Sample 3 (porous granules, 30% bag weight reduction) has comparable infusion performance to Control A (leaf tea, standard bag weight).

### Example 3

The control material & tea granules were obtained & prepared as described above in Example 1. Once again, the infusion performance of the porous tea granules was compared to that of control tea material. The infusion characteristics were determined using samples in a loose tea format (i.e. not contained in a tea bag). The appropriate amount (2 g) of the control tea material or the porous tea granules was infused in 200 ml of water at 90°C whilst being continuously stirred. Absorbance was measured at 445 nm. The total infusion time was 120 seconds, and the sampling frequency was 1 sample per second.

The infusion curves are shown in Figure 4. Sample 4 (porous granules, 2 g) had improved infusion performance compared with Control B (leaf tea, 2g).

### Example 4

The control material & tea granules were obtained & prepared as described above in Example 1. The infusion performance of the porous tea granules as a component of a tea blend was compared to that of control tea material. Table 3 shows the amounts of leaf tea or tea granules used in each case. Samples 5,6 and 7 are blends of tea granules and leaf tea (PF1 material), approximately 70% leaf tea and 30% tea granules.

**Table 3**

| | **Control C** | **Control D** | **Sample 5** | **Sample 6** | **Sample 7** |
|---|---|---|---|---|---|
| **Leaf tea** | 3.125 g | 2.81 g | 2.08 g | 2.08 g | 1.87 g |
| **Tea granules** | - | - | 0.78 g | 0.82 g | 0.78 g |

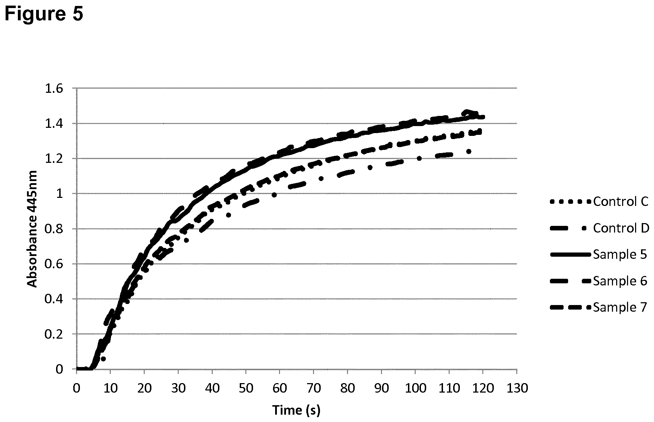

The infusion characteristics were determined using the dynamic method as described in Example 2 (above). The infusion curves are shown in Figure 5.

Both Sample 5 (granule/leaf blend; 10% bag weight reduction) and Sample 6 (granule/leaf blend; 7% bag weight reduction) have improved infusion performance compared with Control C (leaf tea, standard bag weight). Sample 7 (granule/leaf blend; 15% bag weight reduction) has comparable infusion performance to Control C (leaf tea, standard bag weight). The infusion performance of Control D (leaf tea, 10% bag weight reduction) is lower than Control C (leaf tea, standard bag weight).

## Claims

1. Porous tea granules comprising leaf tea particles and binder, wherein:
• at least 50 % by weight of the leaf tea particles have a particle size of 100 µm to 300 µm;
• the binder comprises exogenous biopolymer;
• the tea granules comprise binder in an amount of 0.01 to 3 % by dry weight; and
• the porous tea granules have a D[4,3] of more than 350 µm.

2. Porous tea granules as claimed in claim 1 wherein the exogenous biopolymer is selected from polysaccharides, oligosaccharides, gums, and derivatives thereof.

3. Porous tea granules as claimed in claim 1 or claim 2 wherein the tea granules comprise binder in an amount of 0.1 to 1 % by dry weight.

4. Porous tea granules as claimed in any one of claims 1 to 3 wherein the leaf tea particles are ground leaf tea particles.

5. Porous tea granules as claimed in any one of claims 1 to 4 wherein the leaf tea having a particle size of 100 µm to 300 µm is black leaf tea.

6. Porous tea granules as claimed in any one of claims 1 to 5 wherein the porous tea granules have a D[4,3] of more than 450 µm.

7. A beverage precursor comprising the porous tea granules as claimed in any one of claims 1 to 6.

8. A beverage precursor as claimed in claim 7 wherein the beverage precursor additionally comprises leaf tea wherein at least 90 wt% of the leaf tea has a particle size of smaller than 4.0 mm and larger than 595 micrometer (-5+30 mesh).

9. A beverage precursor as claimed in claim 8 wherein the weight ratio of porous tea granules to leaf tea is from 5:1 to 1:5.

10. A beverage precursor as claimed in any one of claims 7 to 9 wherein the beverage precursor is packaged in an infusion packet.

11. A beverage precursor as claimed in any one of claims 7 to 10 wherein the beverage precursor has a mass of 1 g to 4 g.

12. A process for manufacturing porous tea granules, the process comprising the steps of:
(a) providing leaf tea;
(b) grinding and/or sieving the leaf tea such that at least 50 % by weight of the leaf tea has a particle size of 100 to 300 µm;
(c) forming a mixture comprising the leaf tea obtained in step (b) and binder;
(d) forming porous granules from the mixture by low-shear granulation;
wherein the porous tea granules have a D[4,3] of more than 350 µm and wherein the binder comprises exogenous biopolymer.

13. A process as claimed in claim 12 wherein steps (c) and (d) are performed simultaneously.

14. A process for manufacturing a beverage precursor wherein porous tea granules as claimed in any one of claims 1 to 5 are combined with leaf tea, wherein at least 90 wt% of the leaf tea has a particle size of smaller than 4.0 mm and larger than 595 micrometer (-5+30 mesh).

15. A process as claimed in claim 14 wherein the beverage precursor is packaged in an infusion packet.

## Patentansprüche

1. Poröses Teegranulat, umfassend Blatttee-Partikel und Bindemittel, wobei:
• mindestens 50 Gewichts-% der Blatttee-Partikel eine Partikelgröße von 100 µm bis 300 µm aufweisen;
• das Bindemittel exogenes Biopolymer umfasst;
• das Teegranulat Bindemittel in einer Menge von 0,01 bis 3%, bezogen auf Trockengewicht, umfasst; und
• das poröse Teegranulat einen D[4,3] von mehr als 350 µm aufweist.

2. Poröses Teegranulat, wie im Anspruch 1 beansprucht, wobei das exogene Biopolymer unter Polysacchariden, Oligosacchariden, Gummis und Derivaten davon ausgewählt ist.

3. Poröses Teegranulat, wie im Anspruch 1 oder Anspruch 2 beansprucht, wobei das Teegranulat Bindemittel in einer Menge von 0,1 bis 1%, bezogen auf Trockengewicht, umfasst.

4. Poröses Teegranulat, wie in irgendeinem der Ansprüche 1 bis 3 beansprucht, wobei die Blatttee-Partikel gemahlene Blatttee-Partikel sind.

5. Poröses Teegranulat, wie in irgendeinem der Ansprüche 1 bis 4 beansprucht, wobei der Blatttee, der eine Partikelgröße von 100 µm bis 300 µm aufweist, schwarzer Blatttee ist.

6. Poröses Teegranulat, wie in irgendeinem der Ansprüche 1 bis 5 beansprucht, wobei das poröse Teegranulat einen D[4,3] von mehr als 450 µm aufweist.

7. Getränkevorprodukt, umfassend das poröse Teegranulat, wie in irgendeinem der Ansprüche 1 bis 6 beansprucht.

8. Getränkevorprodukt, wie im Anspruch 7 beansprucht, wobei das Getränkevorprodukt zusätzlich Blatttee umfasst, wobei mindestens 90 Gew.-% des Blatttees eine Partikelgröße von kleiner als 4,0 mm und größer als 595 Mikrometer (-5+30 mesh) aufweist.

9. Getränkevorprodukt, wie im Anspruch 8 beansprucht, wobei das Gewichtsverhältnis des porösen Teegranulats zum Blatttee von 5:1 bis 1:5 beträgt.

10. Getränkevorprodukt, wie in irgendeinem der Ansprüche 7 bis 9 beansprucht, wobei das Getränkevorprodukt in einem Aufgusspaket verpackt ist.

11. Getränkevorprodukt, wie in irgendeinem der Ansprüche 7 bis 10 beansprucht, wobei das Getränkevorprodukt eine Masse von 1 g bis 4 g aufweist.

12. Verfahren zur Herstellung von porösem Teegranulat, wobei das Verfahren die Schritte umfasst:
(a) Bereitstellen von Blatttee;
(b) Mahlen und/oder Sieben des Blatttees derartig, dass mindestens 50 Gewichts-% des Blatttees eine Partikelgröße von 100 bis 300 µm aufweisen;
(c) Ausbilden einer Mischung, die den Blatttee, erhalten im Schritt (b), und Bindemittel umfasst;
(d) Ausbilden porösen Granulats aus der Mischung durch Granulieren mit geringer Scherung;
wobei das poröse Teegranulat einen D[4,3] von mehr als 350 µm aufweist und wobei das Bindemittel exogenes Biopolymer umfasst.

13. Verfahren, wie im Anspruch 12 beansprucht, wobei die Schritte (c) und (d) gleichzeitig durchgeführt werden.

14. Verfahren zur Herstellung eines Getränkevorprodukts, wobei poröses Teegranulat, wie in irgendeinem der Ansprüche 1 bis 5 beansprucht, mit Blatttee kombiniert wird, wobei mindestens 90 Gew.-% des Blatttees eine Partikelgröße von kleiner als 4,0 mm und größer als 595 Mikrometer (-5+30 mesh) aufweist.

15. Verfahren, wie im Anspruch 14 beansprucht, wobei das Getränkevorprodukt in einem Aufgusspaket verpackt ist.

## Revendications

1. Granules de thé poreuses comprenant des particules de thé en feuilles et un liant, dans lesquels :
• au moins 50 % en masse des particules de thé en feuilles présentent une taille de particule de 100 µm à 300 µm ;
• le liant comprend un biopolymère exogène ;
• les granules de thé comprennent un liant dans une quantité de 0,01 à 3 % en masse sèche ; et
• les granules de thé poreuses présentent un D[4,3] supérieur à 350 µm.

2. Granules de thé poreuses selon la revendication 1, dans lesquelles le biopolymère exogène est choisi parmi des polysaccharides, oligosaccharides, gommes, et dérivés de ceux-ci.

3. Granules de thé poreuses selon la revendication 1 ou la revendication 2, dans lesquelles les granules de thé comprennent un liant dans une quantité de 0,1 à 1 % en masse sèche.

4. Granules de thé poreuses selon l'une quelconque des revendications 1 à 3, dans lesquelles les particules de thé en feuilles sont des particules de thé en feuilles broyées.

5. Granules de thé poreuses selon l'une quelconque des revendications 1 à 4, dans lesquelles le thé en feuilles présentant une taille de particule de 100 µm à 300 µm est du thé en feuilles noir.

6. Granules de thé poreuses selon l'une quelconque des revendications 1 à 5, dans lesquelles les granules de thé poreuses présentent un D[4,3] supérieur à 450 µm.

7. Précurseur de boisson comprenant les granules de thé poreuses selon l'une quelconque des revendications 1 à 6.

8. Précurseur de boisson selon la revendication 7, dans lequel le précurseur de boisson comprend de plus du thé en feuilles dans lequel au moins 90 % en masse du thé en feuilles présentent une taille de particule inférieure à 4,0 mm et supérieure à 595 micromètres (-5+30 mesh).

9. Précurseur de boisson selon la revendication 8, dans lequel le rapport massique de granules de thé poreuses à thé en feuilles est de 5:1 à 1:5.

10. Précurseur de boisson selon l'une quelconque des revendications 7 à 9, dans lequel le précurseur de boisson est emballé dans un sachet d'infusion.

11. Précurseur de boisson selon l'une quelconque des revendications 7 à 10, dans lequel le précurseur de boisson présente une masse de 1 g à 4 g.

12. Procédé de fabrication de granules de thé poreuses, le procédé comprenant les étapes de :
(a) fourniture de thé en feuilles ;
(b) broyage et/ou tamisage du thé en feuilles de sorte qu'au moins 50 % en masse du thé en feuilles présentent une taille de particule de 100 à 300 µm;
(c) formation d'un mélange comprenant le thé en feuilles obtenu dans l'étape (b) et un liant ;
(d) formation de granules poreuses à partir du mélange par granulation à faible cisaillement ;
dans lequel les granules de thé poreuses présentent un D[4,3] supérieur à 350 µm et dans lequel le liant comprend un biopolymère exogène.

13. Procédé selon la revendication 12, dans lequel les étapes (c) et (d) sont réalisées simultanément.

14. Procédé de fabrication d'un précurseur de boisson, dans lequel des granules de thé poreuses selon l'une quelconque des revendications 1 à 5 sont combinées avec du thé en feuilles, dans lequel au moins 90 % en masse du thé en feuilles présentent une taille de particule inférieure à 4,0 mm et supérieure à 595 micromètres (-5+30 mesh).

15. Procédé selon la revendication 14, dans lequel le précurseur de boisson est emballé dans un sachet d'infusion.
